# EUROPÄISCHE PATENTANMELDUNG

(11) **EP 1 970 575 A2**
(43) Veröffentlichungstag der Anmeldung: **17.09.2008**
(21) Anmeldenummer: 08004142.9
(22) Anmeldetag: 13.02.2008
(51) Int. Cl.: F16B 13/12

(54) **Spreizdübel für zweischaliges Mauerwerk**

(30) Priorität: 13.03.2007 DE 102007011881
(71) Anmelder: fischerwerke GmbH & Co. KG, 72178 Waldachtal (DE)
(72) Erfinder: Renz, Jürgen, 72202 Nagold (DE)
(74) Vertreter: Suchy, Ulrich Johannes

(57) **Zusammenfassung**

Die Erfindung betrifft einen Spreizdübel (1) mit einem vorderen und einem hinteren Spreizbereich (4, 7) zur Befestigung eines Verblendmauerwerks (2) an einer tragenden Wandinnenschale (3) eines zweischaligen Mauerwerks (2, 3). Die Erfindung schlägt vor, den Spreizdübel (1) mit einer Verkürzungszone (22) mit einer Solltrennstelle (14) auszubilden, an der der Spreizdübel (1) trennbar und ein hinterer, ein Spreizelement (15) bildender Abschnitt in eine Spreizhülse (11) des hinteren Spreizbereichs (7) des Spreizdübels (1) schiebbar ist. Dadurch wird der Spreizdübel (1) verkürzt, so dass sich ein Kopf (18) des Spreizelements (9) im Verblendmauerwerk (2) versenken lässt.

## Beschreibung

Die Erfindung betrifft einen Spreizdübel für zweischaliges Mauerwerk mit den Merkmalen des Oberbegriffs des Anspruchs 1. Zweischaliges Mauerwerk oder zweischalige Außenwände weisen eine tragende Wandinnenschale und ein Verblendmauerwerk, das auch als Außenschale bezeichnet wird, auf. Zwischen der Wandinnenschale und dem Verblendmauerwerk besteht ein Zwischenraum, in dem normalerweise ein lsoliermaterial, beispielsweise Dämmstoffplatten, angeordnet sind. Das Verblendmauerwerk muss mit Abstand an der tragenden Wandinnenschale befestigt werden, wozu der erfindungsgemäße Spreizdübel vorgesehen ist.

Benötigt wird ein solcher Spreizdübel insbesondere zur Sanierung eines zweischaligen Mauerwerks oder zum nachträglichen Anbringen eines Verblendmauerwerks oder allgemein einer Vorsatzschale an einer Wand. Die Verwendung des Spreizdübels ist nicht auf zweischaliges Mauerwerk beschränkt.

Ein derartiger Spreizdübel für zweischaliges Mauerwerk ist bekannt aus der EP 0 928 901 A1. Der bekannte Spreizdübel weist einen vorderen und einen hinteren Spreizbereich auf, die durch Einbringen eines Spreizelements aufspreizbar sind. Dabei wird als vorderes Ende der Bereich oder dasjenige Ende des Spreizdübels angesehen, mit dem voran der Spreizdübel in ein Bohrloch oder dgl. eingebracht wird. Das hintere Ende des Spreizdübels ist dasjenige, durch das das Spreizelement in den Spreizdübel eingebracht wird. Das Spreizelement des bekannten Spreizdübels ist eine Schraube mit einem Gewinde an ihrem vorderen Ende, das beim Einbringen des Spreizelements in den vorderen Spreizbereich eingeschraubt wird. In einem hinteren Abschnitt weist das Spreizelement des bekannten Spreizdübels einen größeren Durchmesser ohne Gewinde aber beispielsweise mit einer Tannenbaumprofilierung auf. Beim Einbringen des Spreizelements in den Spreizdübel wird durch Einschrauben des Gewindes des Spreizelements in den vorderen Spreizbereich des Spreizdübels der hintere Abschnitt des Spreizelements mit dem größeren Durchmesser in den hinteren Spreizbereich des Spreizdübels eingezogen. Durch das Einschrauben des Gewindes in den vorderen Spreizbereich und das Einziehen des hinteren Abschnitts des Spreizelements mit dem größeren Durchmesser in den hinteren Spreizbereich des Spreizdübels werden beide Spreizbereiche aufgespreizt. Durch das Aufspreizen wird der vordere Spreizbereich in einem Bohrloch in einer tragenden Wandinnenschale oder einem anderen Ankergrund und durch Aufspreizen des hinteren Spreizbereichs wird dieser in einem durchgehenden Bohrloch in einem Verblendmauerwerk oder einer Vorsatzschale verankert. Die Vorsatzschale ist dadurch mit Abstand von der Wandinnenschale an der Wandinnenschale befestigt. Ein Kopf des Spreizelements befindet sich auf oder an einer Oberfläche der Vorsatzschale, wenn das Spreizelement vollständig in den Spreizdübel eingebracht ist.

Der Erfindung liegt die Aufgabe zugrunde, einen Spreizdübel für zweischaliges Mauerwerk vorzuschlagen, der ein Versenken eines Kopfs seines Spreizelements in einer Vorsatzschale des Mauerwerks ermöglicht.

Diese Aufgabe wird erfindungsgemäß durch die Merkmale des Anspruchs 1 gelöst. Der erfindungsgemäße Spreizdübel mit den Merkmalen des Anspruchs 1 weist eine Verkürzungszone zwischen einem hinteren Dübelende und dem hinteren Spreizbereich auf. Das hintere Dübelende ist dasjenige Ende des Spreizdübels, durch das das Spreizelement in den Spreizdübel eingebracht wird. Die Verkürzungszone des Spreizdübels ist durch Einbringen des Spreizelements in den Spreizdübel verkürzbar. Durch Verkürzen der Verkürzungszone des Spreizdübels mit dem Spreizelement, insbesondere mit dessen Kopf, lässt sich der Kopf des Spreizelements in einer Vorsatzschale eines zweischaligen Mauerwerks versenken. Ein Bohrloch in der Vorsatzschale, in dem der Spreizdübel verankert ist, kann zwischen einer Lochmündung und dem Kopf des Spreizelements bündig mit einer Außenoberfläche der Vorsatzschale verschlossen werden.

Das Aufspreizen beider Spreizbereiche des erfindungsgemäßen Spreizdübels erfolgt ohne eine Abstandsänderung der beiden Spreizbereiche. Das Spreizelement ist insbesondere stiftförmig, beispielsweise eine Schraube oder ein Nagel. Die Schraube kann beispielsweise auch eine einschlagbare Nagelschraube sein. Das Aufspreizen des hinteren Spreizbereichs des erfindungsgemäßen Spreizdübels ist mit einem Spreizelement möglich, das keinen vergrößerten Durchmesser in seinem hinteren Bereich aufweist, der sich bei gesetztem Spreizdübel im hinteren Spreizbereich des Spreizdübels befindet. Allerdings schließt die Erfindung ein Spreizelement mit einem Abschnitt mit größerem Durchmesser nicht aus. Der vordere Spreizbereich des erfindungsgemäßen Spreizdübels kann wie herkömmliche Spreizdübel ausgebildet sein. Im Anschluss, also zwischen den Spreizbereichen, kann der erfindungsgemäße Spreizdübel hülsenförmig ausgebildet sein, wobei der hintere Spreizbereich als Spreizhülse, d.h. durch Einbringen des Spreizelements aufspreizbar, ausgebildet sein kann.

Zum Verkürzen kann die Verkürzungszone des erfindungsgemäßen Spreizdübels elastisch und/oder plastisch stauchbar sein. Die Verkürzungszone kann auch Ausnehmungen in ihrer Wand aufweisen, die das Verkürzen in Längsrichtung des Spreizdübels ermöglichen. Auch eine Torsion der Verkürzungszone zu ihrer Verkürzung ist denkbar, wobei die Torsion insbesondere durch Form, Anordnung und Ausrichtung von Ausnehmungen in der Wand der Verkürzungszone bewirkt oder jedenfalls begünstigt werden kann. Eine bevorzugte Ausgestaltung der Erfindung sieht eine Solltrennstelle vor, an der sich der Spreizdübel bei einem Stauchen mit dem Spreizelement in zwei Teile trennt, die sich zum Verkürzen des Spreizdübels ineinanderschieben. Dabei ist "Ineinanderschieben" weit auszulegen als In-, Auf-, Zwischen- oder Nebeneinanderschieben. Das "Ineinanderschieben" ist anhand seines Zwecks auszulegen, dass sich der an der Solltrennstelle abgetrennte hintere Teil des Spreizdübels relativ zum übrigen Spreizdübel bewegt und sich dem hinteren Spreizbereich nähert, so dass sich der Spreizdübel insgesamt verkürzt. Dabei ändern die beiden Spreizbereiche ihren Abstand voneinander nicht. Die Verkürzung erfolgt ausschließlich in der Verkürzungszone zwischen dem hinteren Dübelende und dem hinteren Spreizbereich des Spreizdübels.

Eine Weiterbildung der Erfindung sieht vor, dass eines der beiden Teile, in die der Spreizdübel an seiner Solltrennstelle trennbar ist, ein Spreizelement bildet, das das andere Teil des Spreizdübels beim Ineinanderschieben der beiden Teile des Spreizdübels spreizt. Das das Spreizelement bildende Teil kann beispielsweise einen konischen Abschnitt oder keilförmige Laschen aufweisen, der/die sich in den anderen Teil des Spreizdübels schieben und diesen aufspreizen. Möglich ist auch, beide Teile, in die der Spreizdübel an der Solltrennstelle trennbar ist, als Spreizelemente auszubilden, die einander gegenseitig aufspreizen.

Eine Ausgestaltung der Erfindung sieht vor, dass die Spreizbereiche des Spreizdübels durch Einbringen des Spreizelements aufgespreizt werden, bevor die Verkürzungszone durch das Spreizelement verkürzt wird. Die beiden Spreizbereiche des erfindungsgemäßen Spreizdübels werden dadurch in der Wandinnenschale und in der Außenschale verankert, bevor die Verkürzungszone verkürzt wird. Dadurch wird eine Kraft auf die Außenschale in Richtung der Wandinnenschale durch Verkürzen der Verkürzungszone vermieden. Diese Ausgestaltung der Erfindung schließt ein weiteres oder zusätzliches Aufspreizen insbesondere des hinteren Spreizbereichs beim Verkürzen der Verkürzungszone nicht aus. Wesentlich ist ein Halt des hinteren Spreizbereichs in Längsrichtung des Spreizdübels in der Außenschale bevor die Verkürzungszone verkürzt wird.

Eine Ausgestaltung der Erfindung sieht einen glattwandigen Bereich des Spreizelements in dem Bereich vor, der sich bei gesetztem Spreizdübel im hinteren Spreizbereich befindet. Der glattwandige Bereich des Spreizelements erstreckt sich soweit nach vorn, dass er sich im hinteren Spreizbereich des Spreizdübels befindet, wenn ein vorderes Ende des Spreizelements den vorderen Spreizbereich des Spreizdübels erreicht. Der glattwandige Bereich des Spreizelements befindet sich beim Aufspreizen des vorderen Spreizbereichs im hinteren Spreizbereich des Spreizdübels. Durch den glattwandigen Bereich ist eine Reibung zwischen dem Spreizelement und dem Spreizdübel gering, so dass der Spreizdübel nicht oder allenfalls vernachlässigbar gering durch die Längsbewegung des Spreizelements beim Aufspreizen gestaucht wird. Das Aufspreizen beider Spreizbereiche erfolgt dadurch ohne Änderung ihres Abstands.

Ein Durchmesser eines Kopfs des Spreizelements ist nicht größer als ein Durchmesser des Spreizdübels, so dass der Kopf des Spreizelements in dem Bohrloch in der Außenschale des zweischaligen Mauerwerks versenkbar ist, in dem der Spreizdübel verankert ist.

Die Erfindung wird nachfolgend anhand eines in der Zeichnung dargestellten Ausführungsbeispiels näher erläutert.

Es zeigen:
- Figur 1: einen erfindungsgemäßen Spreizdübel in Ansicht;
- Figur 2: den Spreizdübel aus Figur 1 in verankertem (gesetztem) Zustand in einer Achsschnittdarstellung;
- Figuren 3-5: einen hinteren Bereich des Spreizdübels aus Figur 2 in aufeinanderfolgenden Verankerungsschritten in größerer Darstellung; und
- Figuren 6-7: einen hinteren Bereich des Spreizdübels aus Figur 1 in nichtaufgespreiztem Zustand (Figur 6) und in aufgespreiztem Zustand (Figur 7) in nochmals größerem Maßstab.

Der in der Zeichnung dargestellte, erfindungsgemäße Spreizdübel 1 ist zur Befestigung eines Verblendmauerwerks (Außenschale) 2 an einer tragenden Wandinnenschale 3 von zweischaligen Mauerwerken vorgesehen. Das Verblendmauerwerk 2 ist beispielsweise aus Ziegelsteinen gemauert, die tragende Wandinnenschale 3 kann beispielsweise ebenfalls Mauerwerk oder Beton sein. Die tragende Wandinnenschale 3 kann auch als Ankergrund aufgefasst werden. Die Erfindung ist nicht auf diese Verwendung beschränkt.

Der Spreizdübel 1 ist auf einem Großteil seiner Länge hülsenförmig ausgebildet und weist an seinem vorderen Ende einen vorderen Spreizbereich 4 auf. Der vordere Spreizbereich 4 kann wie bekannte Spreizdübel ausgebildet sein. Im dargestellten und beschriebenen Ausführungsbeispiel der Erfindung verengt sich ein Hohlraum des hülsenförmigen Spreizdübels 1 im vorderen Spreizbereich 4 zu einem Schraubkanal, in dem durch Längsschlitze 5 in Längsrichtung verlaufende Spreizschenkel 6 gebildet sind. Die Schlitze müssen nicht zwingend Längsschlitze 5 sein, sie können beispielsweise auch wellenförmig oder wendelförmig verlaufen. Auch eine Aufspreizbarkeit des vorderen Spreizbereichs 4 durch elastische und/oder plastische Aufweitung ist möglich. Als "vorn" wird das Dübelende angesehen, mit dem voraus der Spreizdübel 1 in ein Bohrloch eingeführt wird.

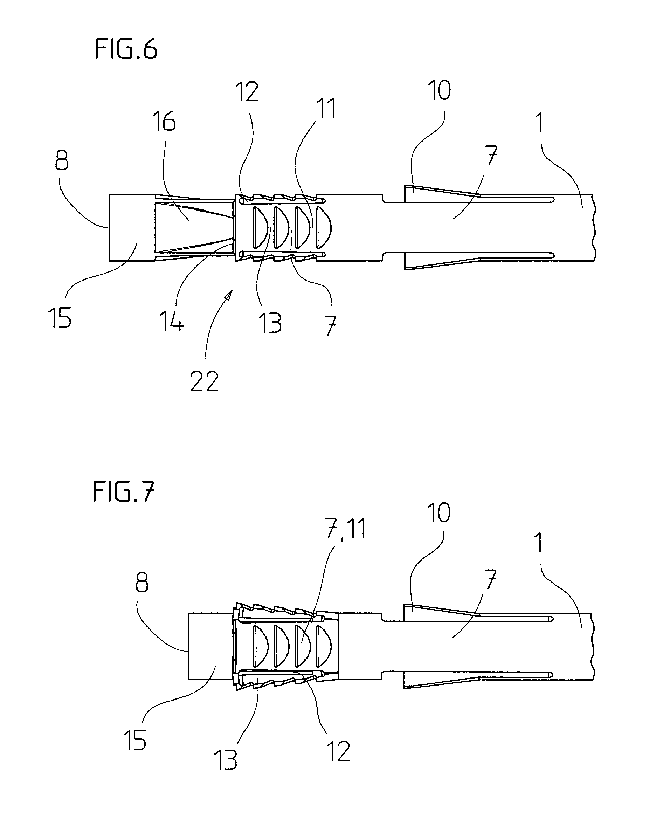

Mit Abstand vom vorderen Spreizbereich 4 weist der Spreizdübel 1 einen hinteren Spreizbereich 7 auf, der Abstand von einem hinteren Ende 8 des Spreizdübels 1 aufweist. Das hintere Dübelende 8 ist offen zum Einbringen eines stiftförmigen Spreizelements 9 in den Spreizdübel 1. Der hintere Spreizbereich 7 weist Spreizlaschen 10 auf, die sich in Längsrichtung des Spreizdübels 1 erstrecken und an ihren vorderen Enden einstückig in den Spreizdübel 1 übergehen. Nach hinten verdicken sich die Spreizlaschen 10, sie sind durch sie begrenzende Schlitze von einer Dübelwand des Spreizdübels 1 getrennt. Die Spreizlaschen 10 können nach innen und nach außen federn. Im Anschluss an die Spreizlaschen 10 weist der Spreizbereich 7 des Spreizdübels 1 eine Spreizhülse 11 auf, die durch Längsschlitze 12 in Spreizschenkel 13 unterteilt ist. Im dargestellten Ausführungsbeispiel weist der Spreizdübel 1 vier Spreizschenkel 13 auf, allerdings sind Anzahl und Form der Spreizschenkel 13 nicht zwingend. Durch Kerben an den Außenseiten sind die Spreizschenkel 13 der Spreizhülse 11 sägezahnförmig profiliert (vgl. insbesondere Figuren 6 und 7). Die Bezeichnung als Spreizschenkel 6, Spreizlaschen 10 und Spreizschenkel 13 dient der Unterscheidung der Elemente und lässt nicht auf zwingend unterschiedliche Form schließen.

Über eine Solltrennstelle 14 geht der Spreizdübel 1 an einem hinteren Ende seines Spreizbereichs 7 und seiner Spreizhülse 11 in einen nachfolgend als Spreizelement 15 bezeichneten Abschnitt über, der bis zum hinteren Dübelende 8 reicht. Das Spreizelement 15 ist ebenfalls hülsenförmig, sein vorderer Abschnitt 16 verjüngt sich zur Solltrennstelle 14 hin kegelstumpfförmig. Durch die Verjüngung 16 ist eine umlaufende Einschnürung oder Kerbe gebildet, die die Solltrennstelle 14 bildet. Der Spreizdübel 1 ist einstückig, er besteht aus Kunststoff. Er kann auch aus mehreren Teilen gefügt sein.

Das Spreizelement 9 des Spreizdübels 1 ist eine Nagelschraube mit einem Gewinde 17, das sich von einem vorderen Schraubenende (Schraubenspitze) über weniger als die Hälfte der Länge der Nagelschraube 9 erstreckt. Die Länge des Spreizelements 9 und des Schraubengewindes 17 sind auf die Geometrie des Spreizdübels 1 abgestimmt. Das Schraubengewinde 17 weist eine nach hinten gerichtete Sägezahnprofilierung auf. Die Nagelschraube 9 ist dadurch wahlweise in den Spreizdübel 1 einschlag- oder einschraubbar. Vom hinteren Ende des Schraubengewindes 17 bis zu einem hinteren Schraubenende ist die das Spreizelement 9 bildende Nagelschraube glattwandig. Am hinteren Schraubenende weist die Nagelschraube 9 einen Kopf 18 mit einem nicht sichtbaren Kreuzschlitz, Innensechskant oder Innenstern zum Ansetzen eines Drehwerkzeugs auf. Ein Durchmesser des Schraubenkopfs 18 ist nicht größer als ein Durchmesser des Spreizdübels 1.

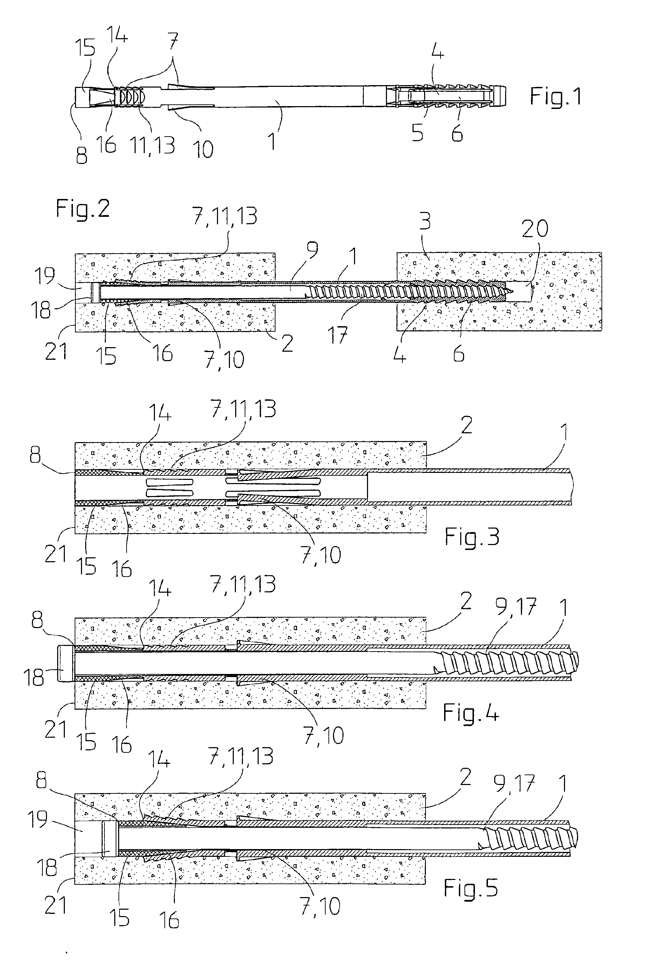

Zum Setzen wird der Spreizdübel 1 ohne das Spreizelement 9 durch ein durchgehendes Bohrloch 19 im Verblendmauerwerk 2 durch- bis in ein Bohrloch (Sackloch) 20 in der tragenden Wandinnenschale 3 gesteckt. Der vordere Spreizbereich 4 befindet sich im Bohrloch 20 in der Wandinnenschale 3, der hintere Spreizbereich 7 befindet sich im Verblendmauerwerk 2. Das hintere Ende 8 des Spreizdübels 1 ist wie in Figur 3 zu sehen bündig mit einer Außenoberfläche 21 des Verblendmauerwerks 2. Anschließend wird die das Spreizelement 9 bildende Nagelschraube in den Spreizdübel 1 eingebracht und mit dem Schraubengewinde 17 in den vorderen Spreizbereich 4 eingeschraubt oder eingeschlagen. Beim Einbringen in den Spreizdübel 1 drückt das Spreizelement 9 die sich nach hinten verdickenden Spreizlaschen 10 im hinteren Spreizbereich 7 nach außen, d.h. das Spreizelement 9 spreizt den hinteren Spreizbereich 7 des Spreizdübels 1 auf. Außerdem spreizt das Spreizelement 9 den wie ein gewöhnlicher Spreizdübel ausgebildeten vorderen Spreizbereich 4 des Spreizdübels 1 auf. Der Spreizdübel 1 ist dadurch mit seinem hinteren Spreizbereich 7 im Verblendmauerwerk 2 und mit seinem vorderen Spreizbereich 4 in der tragenden Wandinnenschale 3 verankert. Dabei erfolgt keine Stauchung oder sonstige Längenänderung des Spreizdübels 1, ein Abstand der Spreizbereiche 4, 7 bleibt beim Einbringen des Spreizelements 9 und Aufspreizen des Spreizdübels 1 unverändert. Ein Abstand zwischen dem Verblendmauerwerk 2 und der tragenden Wandinnenschale 3 wird durch das Verankern des Spreizdübels 1 nicht verändert.

Das Spreizelement 9 wird durch Einschrauben oder Einschlagen tiefer in das zweischalige Mauerwerk 2, 3 eingebracht, so dass der Schraubenkopf 18 im Bohrloch 19 im Verblendmauerwerk 2 versenkt ist, wie in Figuren 2 und 5 zu sehen. Dabei übt der Schraubenkopf 18 eine Kraft in Längsrichtung des Spreizdübels 1 auf dessen hinteren, das Spreizelement 15 bildenden Abschnitt aus. Die Kraftbeaufschlagung trennt den Spreizdübel 1 an der Solltrennstelle 14 in zwei Teile, nämlich das Spreizelement 15 als ein Teil und den hinteren Spreizbereich 4, 7 mit der Spreizhülse 11 als anderes Teil. Wie in Figuren 2, 5 und 7 zu sehen, schiebt sich das Spreizelement 15 mit seinem sich konisch verjüngenden Abschnitt 16 in die Spreizhülse 11, die Teil des hinteren Spreizbereichs 7 des Spreizdübels 1 ist. Der konische Abschnitt 16 des Spreizelements 15 spreizt die Spreizschenkel 13 der Spreizhülse 11 auf, so dass der Spreizdübel 1 zusätzlich zur Aufspreizung seiner Spreizlaschen 10 im Verblendmauerwerk 2 verankert ist. Da der hintere Spreizbereich 7 bereits durch das Aufspreizen der Spreizlaschen 10 im Verblendmauerwerk 2 verankert ist, stützt der Spreizdübel 1 das Verblendmauerwerk 2 beim Trennen an der Solltrennstelle 14 und beim Schieben des Spreizelements 15 in die Spreizhülse 11 an der tragenden Wandinnenschale 3 ab, so dass der Abstand zwischen tragender Wandinnenschale 3 und Verblendmauerwerk 2 weiterhin unverändert bleibt. Denkbar ist auch ein Einbringen des Spreizdübels 1 in die Bohrlöcher 19, 20 im zweischaligen Mauerwerk 2, 3 mit bereits im Spreizdübel 1 befindlichen Spreizelement 9.

Durch das Schieben des konischen Abschnitts 16 des Spreizelements 15 in die Spreizhülse 11 verkürzt sich der Spreizdübel 1 in seiner Längsrichtung, wodurch der Schraubenkopf 18 wie in Figuren 2 und 5 dargestellt unter die Außenoberfläche 21 des Verblendmauerwerks 2 versenkbar ist. Der konische Abschnitt 16 des Spreizelements 15 und der Bereich der Solltrennstelle 14 bilden eine Verkürzungszone 22 des Spreizdübels 1.

Beim Aufspreizen des vorderen Spreizbereichs 4 befindet sich der glattwandige Bereich der das Spreizelement 9 bildenden Nagelschraube im hinteren Spreizbereich 7, wodurch eine Reibung zwischen dem Spreizelement 9 und dem hinteren Spreizbereich 7 des Spreizdübels 1 und damit eine Kraftübertragung vom Spreizelement 9 in Längsrichtung auf den Spreizdübel 1 gering ist. Diese Kraft in Längsrichtung stützt der Spreizdübel 1 ohne Längenänderung ab und damit ohne Änderung des Abstands zwischen seinem vorderen und hinteren Spreizbereich 4, 7 ab, so das sich der Abstand zwischen dem Verblendmauerwerk 2 und der tragenden Wandinnenschale 3 des zweischaligen Mauerwerks 2, 3 nicht ändert.

## Patentansprüche

1. Spreizdübel für zweischaliges Mauerwerk, mit einem vorderen und einem hinteren Spreizbereich (4, 7), die beide durch Einbringen eines Spreizelements (9) in den Spreizdübel (1) ohne Änderung eines Abstands der beiden Spreizbereiche (4, 7) aufgespreizt werden, **dadurch gekennzeichnet, dass** der Spreizdübel (1) eine Verkürzungszone (22) zwischen dem hinteren Spreizbereich (7) und einem hinteren Dübelende (8), durch das das Spreizelement (9) in den Spreizdübel (1) einbringbar ist, aufweist, die durch Einbringen des Spreizelements (9) in den Spreizdübel (1) in Längsrichtung des Spreizdübels (1) verkürzbar ist.

2. Spreizdübel nach Anspruch 1, **dadurch gekennzeichnet, dass** die Verkürzungszone (22) eine Solltrennstelle (14) aufweist, an der der Spreizdübel (1) durch Stauchen mit dem Spreizelement (9) in zwei Teile (1, 15) trennbar ist, die sich zum Verkürzen der Verkürzungszone (22) ineinanderschieben.

3. Spreizdübel nach Anspruch 2, **dadurch gekennzeichnet, dass** eines der beiden Teile, in die der Spreizdübel (1) durch Trennen an der Solltrennstelle (14) getrennt wird, ein Spreizelement (15) bildet, das das andere Teil (4, 7, 11) beim Ineinanderschieben der beiden Teile (15, 4, 7, 11) spreizt.

4. Spreizdübel nach Anspruch 1, **dadurch gekennzeichnet, dass** die Spreizbereiche (4, 7) durch Einbringen des Spreizelements (9) aufgespreizt werden, bevor die Verkürzungszone (22) verkürzt wird.

5. Spreizdübel nach Anspruch 1, **dadurch gekennzeichnet, dass** das Spreizelement (9) in einem Bereich glattwandig ist, der sich im hinteren Spreizbereich (7) des Spreizdübels (1) befindet, wenn ein vorderes Ende des Spreizelements (9) den vorderen Spreizbereich (4) des Spreizdübels (1) erreicht.

6. Spreizdübel nach Anspruch 1, **dadurch gekennzeichnet, dass** das Spreizelement (9) einen Kopf (18) aufweist, dessen Durchmesser nicht größer als ein Durchmesser des Spreizdübels (1) ist.
